# FASCICULE DE BREVET EUROPEEN

(11) **EP 0 685 534 B1**
(45) Date de publication et mention de la délivrance du brevet: **16.09.1998**
(21) Numéro de dépôt: 95401225.8
(22) Date de dépôt: 24.05.1995
(51) Int. Cl.: C09D 4/00

(54) **Procédé de protection d'un substrat en acier au moyen d'un film mince de polymère hybride organique-inorganique**
Verfahren zum Schutz eines Stahlsubstrates durch einen dünnen Film eines anorganisch-organischen Hybrid-Polymers
Process for protecting a steel substrate with a thin film of an organic-inorganic hybrid polymer

(30) Priorité: 30.05.1994 FR 9406550
(43) Date de publication de la demande: 06.12.1995
(73) Titulaire: SOLLAC, 92800 Puteaux (FR)
(72) Inventeur: Legros, Philippe, F-13800 Istres (FR); Antoine, Philippe, F-13920 St Mitre les Remparts (FR); Poulain, Marcel, F-35700 Rennes (FR)
(74) Mandataire: Polus, Camille

(56) Documents cités:
- DE-A- 4 122 743
- FR-A- 2 260 608

## Description

La présente invention concerne un procédé de protection de substrats en acier au moyen d'un film mince de polymère hybride organique-inorganique.

La protection de pièces métalliques vis-à-vis de phénomènes tels que la corrosion, l'abrasion ou des chocs et endommagements divers permet d'allonger leur durée de vie.

Il existe des procédés de protection très connus comme l'émaillage ou la mise en peinture des métaux. De manière similaire, on peut procéder à l'application de divers matériaux en monocouches ou en multicouches. On recherche constamment des produits nouveaux proches des laques, vernis ou céramiques capables de protéger les surfaces métalliques, d'améliorer leur état de surface, tout en conservant les propriétés fonctionnelles des substrats recouverts.

Deux types de propriétés du revêtement sont recherchées pour la protection : les propriétés mécaniques (dureté, résistance à l'abrasion, la torsion, la traction, ...) et les propriétés de "passivation", d'effet barrière (anti-corrosion, antioxydation, imperméabilité aux liquides et aux gaz).

La technologie de la polymérisation par voie sol-gel fournit des matériaux polymères à base inorganique bien adaptés à la réalisation de revêtements en couche mince.

Les principaux revêtements préparés par voie sol-gel déposés sur substrats métalliques sont des polymères d'oxydes inorganiques, obtenus par hydrolyse et polycondensation de précurseurs composés d'un élément métallique ou métalloïde entouré de différents ligands organiques ou inorganiques. Ces matériaux offrent des protections assez dures mais fragiles qui sont utilisées le plus souvent comme effet barrière contre la corrosion, les liquides ou les hautes températures.

D'autres matériaux de revêtement comprennent un mélange de composés inorganiques et de composés organiques (résines, polymères ...), le procédé sol-gel n'étant utilisé que pour la synthèse du réseau inorganique. Les interactions entre les réseaux organique et inorganique sont selon les cas plus ou moins importantes.

De tels revêtements peuvent servir par exemple de primaire d'adhérence et d'accrochage pour une peinture. Lorsque ces matériaux sont utilisés pour apporter des protections définitives, celles-ci n'allient cependant pas les propriétés mécaniques et de passivation.

DE-A-4 122 743 décrit une composition de revêtement comprenant essentiellement un composé organométallique et un alcoxy silane et est utilisé comme revêtement protecteur contre la rayure sur divers substrats sensibles à la dégradation par rayure.

L'invention a pour but de procurer un procédé de protection de substrats en acier, notamment contre la corrosion ou l'oxydation, ainsi que les chocs et endommagements divers, par l'application d'un revêtement possédant conjointement les propriétés mécaniques et d'effet barrière mentionnées précédemment.

A cet effet, l'invention a pour objet un procédé de protection d'un substrat en acier par lequel on forme sur la surface du substrat un film mince de polymère mixte organique-inorganique à base de polysiloxane.

Pour la mise en oeuvre du procédé de l'invention, le polymère constituant le film est obtenu par copolymérisation d'un organoalcoxysilane de formule (1) en présence d'une part de composés minéraux hydrolysables et condensables et d'autre part de composés organiques copolymérisables, la formule (1) étant la suivante :

R¹ ₓR² _{Y}Si(OR³)_{z} (1)

dans laquelle :
R¹ représente un groupe vinyle ou méthacryloxyalkyle(C₁-C₄),
x est un entier compris entre 0 et 3,
R² représente un groupement organique fonctionnel non polymérisable,
y est un entier compris entre 0 et 3
R³ représente un atome d'hydrogène ou un groupe alkyle comportant de 1 à 4 atomes de carbone,
z est un entier compris entre 1 et 3,
x, y et z étant tels que leur somme vaut 4.

Dans le cas où on effectue la copolymérisation avec un seul alcoxysilane de départ, ce dernier doit nécessairement porter au moins un groupe polymérisable R¹. Dans ce cas, x ne peut varier qu'entre 1 et 3.

Par contre, dans le cas où on utilise un mélange d'alcoxysilanes, il suffit qu'au moins un des alcoxysilanes soit tel que x n'est pas nul. Les autres peuvent avoir une formule (I) où x est choisi de façon quelconque entre 0 et 3.

Dans un premier temps, une composition de revêtement est préparée, qui comprend :
a) un de ces alcoxysilanes ou un mélange de ces alcoxysilanes de formule (1),
b) de 0,05 à 1 équivalent molaire d'un composé ou d'un mélange de composés organométalliques hydrolysables et condensables de formule : M(OR)₄, où M représente un atome de zirconium ou de titane, R représente un atome d'hydrogène ou un groupe alkyle comportant de 1 à 4 atomes de carbone,
c) de 0,5 à 2 équivalents molaires d'eau,
d) un monomère ou un mélange de monomères de copolymérisation organique choisis parmi l'acide acrylique et l'acide méthacrylique, en quantité telle que le rapport molaire dudit acide au composé organométallique M(OR)₄ vaut de 0,5 à 2,
et
e) un intitiateur de polymérisation organique en quantité telle qu'il représente de 0,1 à 2 % du poids total de la composition.

La réaction d'hydrolyse et de condensation est figurée par le schéma ci-dessous, dans le cas particulier d'un alcoxysilane de départ de formule R¹R²Si(OR³)₂

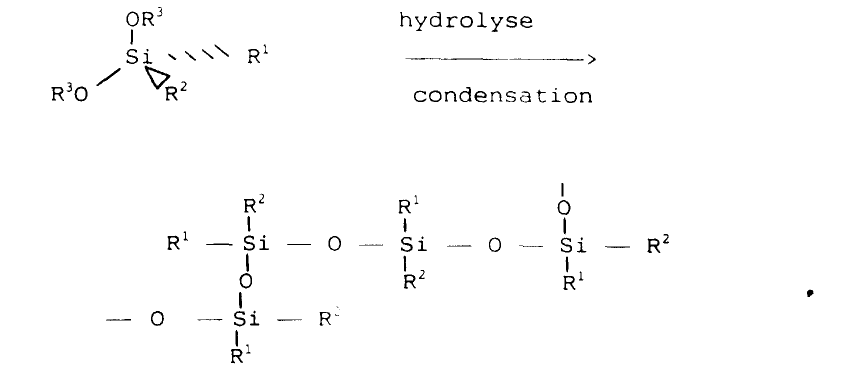

Il est possible d'utiliser un catalyseur acide pour accélérer la réaction d'hydrolyse.

Ensuite, selon le procédé de l'invention, on applique la composition de revêtement ainsi obtenue sur le substrat et on procède à la polymérisation du revêtement sous activation thermique ou photochimique.

Sous l'effet de l'initiateur de polymérisation organique, au cours de l'étape finale, le ou les monomères de copolymérisation organique réagissent avec les groupes polymérisables R¹, qui peuvent éventuellement réagir également entre eux, pour former un réseau organique dans le matériau, greffé sur le réseau polysiloxane.

Parmi les alcoxysilanes de formule (1) possédant un groupement organique polymérisable (x ≠ 0), on préfère employer le vinyltriéthoxysilane, le 3-méthacryloxypropyltriméthoxysilane ou un mélange de ces deux composés.

Les groupements organiques fonctionnels non polymérisables R² pouvant être très variés, on dispose en fait d'un très grand choix d'alcoxysilanes. Parmi les alcoxysilanes ne présentant pas de groupe R¹ (x = O), on peut citer notamment le méthyltriéthoxysilane, le triéthoxyisobutylsilane, le N-(2-aminoéthyl-3-aminopropyl)triméthoxysilane ou le glycidyl-3-oxypropyltriméthoxysilane.

Le composé organométallique est de préférence le tétrapropylate de zirconium ou de titane.

Le monomère de copolymérisation organique est avantageusement l'acide méthacrylique.

L'initiateur de polymérisation peut être un initiateur de polymérisation par voie thermique comme les peroxydes organiques et particulièrement le peroxyde de méthylisobutylcétone.

Il peut également s'agir d'un initiateur de polymérisation par voie photochimique comme les hydroxyphénylcétones et particulièrement la 1-hydroxy-cyclo-hexyl-phényl-cétone ou la 2-hydroxy-2-méthyl-1-phényl-propan-1-one.

Le traitement par polymérisation photochimique présente l'avantage d'être rapide et de nécessiter un faible coût énergétique par rapport à un traitement thermique conventionnel.

La composition de revêtement peut comprendre en outre :
f) un additif ou un mélange d'additifs monomères ou oligomères, polyacrylate ou polyméthacrylate, en quantité telle que le rapport molaire dudit additif à l'alcoxysilane vaut de 0,05 à 1.

Avantageusement, l'additif est choisi parmi le triméthylolpropane tétraacrylate, le ditriméthylolpropane, tétraacrylate, le pentaérythritol triacrylate, le pentaérythritol tétraacrylate, l'isobornyl acrylate, le tris(2-hydroxyéthyl)isocyanurate triacrylate, le 1,6-hexanediol diacrylate, le glycéryl triacrylate propoxylé, des époxyacrylates ou des méthacrylates d'acides aromatiques.

Au cours de la préparation de la composition de revêtement, un pigment, un colorant, un solvant organique, en particulier un alcool, ou des oxydes métalliques notamment des poudres d'oxyde de titane, d'aluminium, de silicium, de zirconium peuvent être ajoutés.

Des charges minérales ou organiques peuvent également être incorporées pour améliorer l'esthétique du revêtement tout en lui conservant ses propriétés protectrices.

La composition de revêtement peut être préparée par tout moyen connu en soi de mise en présence des réactifs employés.

Avantageusement, on prépare d'une part une première solution en mélangeant le ou les alcoxysilanes et l'eau, d'autre part une deuxième solution en mélangeant le composé organométallique avec l'acide copolymérisable. Les deux solutions sont agitées séparément pendant un temps pouvant aller jusqu'à plusieurs heures, puis sont mélangées. On ajoute éventuellement l'additif en maintenant l'agitation et on ajoute enfin l'initiateur de polymérisation.

En variante, on peut préparer une solution en mélangeant le composé organométallique et l'acide copolymérisable puis le ou les alcoxysilanes et enfin l'eau. Après une période d'agitation pouvant aller jusqu'à quelques heures, on ajoute éventuellement l'additif en maintenant l'agitation et on ajoute enfin l'initiateur de polymérisation.

Il est également possible de rajouter aux compositions préparées comme ci-dessus une solution aqueuse contenant un ou plusieurs autres silanes de formule (I) hydrolysés, éventuellement en présence d'un ou plusieurs alcools et d'un acide, par exemple l'acide chlorhydrique, en tant que catalyseur d'hydrolyse.

Avant l'application du revêtement sur le substrat métallique, celui-ci est nettoyé et dégraissé, par exemple par un nettoyage sous ultrasons dans un solvant organique chloré ou non, ou bien par un nettoyage dans une lessive alcaline suivi d'un rinçage à l'eau.

La solution est appliquée sur le substrat à protéger par tout moyen connu en soi. Parmi les techniques courantes, on peut citer l'immersion, l'aspersion, la pulvérisation électrostatique, le spin-coating ou l'électrodéposition.

Avantageusement, le substrat est immergé dans la solution de revêtement, puis on le retire de la solution à vitesse constante. La vitesse de retrait détermine l'épaisseur de la couche mince déposée. Elle peut varier de 2 cm/min à 35 cm/min.

On procède ensuite à la polymérisation de la couche mince déposée sur le substrat.

Lorsqu'un initiateur de polymérisation par voie thermique est utilisé, l'étape de polymérisation se fait de préférence en chauffant graduellement l'échantillon jusqu'à un palier compris entre 60 et 120°C, puis cette température maximale est maintenue pendant une durée variant d'une minute à deux heures et l'échantillon est finalement refroidi graduellement jusqu'à la température ambiante.

Lorsqu'un initiateur de polymérisation par voie photochimique est utilisé, le traitement se fait avantageusement sous rayonnement UV pendant une durée allant de 10 secondes à 5 minutes.

Le film de polymère obtenu est très mince par rapport aux revêtements offerts par d'autres techniques. Lorsque la composition de revêtement est appliquée par immersion, l'épaisseur du revêtement dépend de la vitesse de retrait du substrat. Avantageusement, l'épaisseur du film varie entre 5 et 15 µm.

La protection telle que décrite ci-dessus peut être appliquée sur tous types de pièces métalliques. En particulier, le substrat métallique peut être une pièce emboutie ou non et plus particulièrement des panneaux plans et des pièces déformées.

Des exemples particuliers peuvent être décrits en ce qui concerne l'application on-line ou bien encore l'application sur des pièces embouties dont l'exigence de protection peut concerner toutes les parties : roues, carters, bols de cardans, etc ...

Les techniques de protection de l'invention peuvent être employées en particulier dans tous les domaines d'application des peintures et des émaux et a fortiori lorsque ces dernières protections s'avèrent difficiles voire impossible à mettre en oeuvre.

Les exemples suivants illustrent l'invention.

### EXEMPLE 1

Une solution de revêtement est préparée de la façon suivante, reprise par la suite comme le mode opératoire I.

1 mole de 3-méthacryloxypropyltriméthoxysilane et 0,15 mole d'acide méthacrylique sont mélangées, puis on ajoute 1 mole d'eau d'eau déminéralisée et le mélange est maintenu sous agitation magnétique pendant 1 heure.

D'autre part, 0,35 mole d'acide méthacrylique et 0,2 mole de tétrapropylate de zirconium sont mélangées pendant une heure sous agitation magnétique, puis ajoutées au mélange précédent. On introduit alors 0,1 mole de triméthylolpropane tétraacrylate. Après 30 minutes d'agitation, on ajoute enfin la valeur de 1 % en poids de 2-hydroxy-2-méthyl-1-phényl-propane-1-one.

Un échantillon d'acier décapé de 2 mm d'épaisseur et de dimensions 100 mm x 50 mm est dégraissé dans de l'acétone sous ultrasons pendant 10 minutes puis séché à température ambiante.

Le substrat est alors immergé dans la solution de revêtement puis en est retiré à une vitesse constante.

L'échantillon revêtu sur les deux faces est placé immédiatement sous rayonnement UV pendant en moyenne 1 minute sur chaque face.

### EXEMPLE 2

Une solution de revêtement est préparée de façon analogue avec les composants mentionnés dans le tableau récapitulatif 1 en les proportions indiquées.

Un échantillon identique à celui de l'exemple 1 est revêtu de façon analogue par la solution ci-dessus.

### EXEMPLE 3

Une solution dont la composition est indiquée au tableau 1 est préparée en appliquant le mode opératoire I, à ceci près que l'on mélange d'abord le 3-méthacryloxypropyltriméthoxysilane avec du vinyltriéthoxysilane puis l'eau et le mélange est agité pendant deux heures.

D'autre part, comme dans les exemples 1 et 2, l'acide méthacrylique et le tétrapropylate de zirconium sont mélangés entre eux puis ajoutés au mélange précédent.

Un échantillon d'acier revêtu est préparé comme à l'exemple 1.

### EXEMPLE 4

Une solution de revêtement est préparée de la façon suivante, reprise par la suite comme le mode opératoire II.

0,4 mole d'acide méthacrylique et 0,2 mole de tétrapropylate de zirconium sont mélangées puis sont ajoutées 1 mole de 3-méthacryloxypropyltriméthoxysilane et 1,5 mole d'eau déminéralisée.

Après 1 heure sous agitation magnétique, 0,1 mole de triméthylolpropane tétraacrylate est ajoutée et le mélange est agité pendant 30 minutes supplémentaires.

Finalement, la valeur de 1 % en poids de 1-hydroxy-cyclohexylphénylcétone est ajoutée.

Un échantillon d'acier décapé est revêtu par immersion dans cette solution comme à l'exemple 1.

### EXEMPLE 5

Une solution de revêtement est préparée en appliquant le mode opératoire II et en engageant les composants mentionnés dans le tableau 1 dans les proportions indiquées.

Un échantillon d'acier décapé de 2 mm d'épaisseur et de dimensions 100 mm x 100 mm est dégraissé et nettoyé pendant 2 minutes, par aspersion à 60° C d'une lessive alcaline composée essentiellement d'une solution aqueuse de potasse et d'un tensio-actif. Après ce traitement, l'échantillon est rincé à l'eau puis séché en étuve à 60° C.

Le substrat est alors revêtu de la façon exposée à l'exemple 1.

### EXEMPLES 6 à 8

Les compositions des solutions de revêtement de ces exemples sont indiquées dans le tableau récapitulatif 1, ainsi que le mode opératoire appliqué pour leurs préparations.

Dans l'exemple 6, le pentaérythritol tétraacrylate et le pentaérythritol triacrylate sont ajoutés en même temps que le triméthylolpropane tétraacrylate.

Dans l'exemple 8, le 3-méthacryloxypropyltrimétoxysilane, l'acide méthacrylique, l'eau et le tétrapropylate de titane sont d'abord mis en présence selon le mode opératoire I. Ensuite sont ajoutés 10 % en poids de propanol puis 0,05 mole de ditriméthylolpropanetétraacrylate, et enfin la 1-hydroxy-cyclohexyl-phényl-cétone.

Des échantillons d'acier décapé identiques à celui de l'exemple 5 sont revêtus de la même façon.

### EXEMPLE 9

Une solution de revêtement est préparée d'après le mode opératoire II à partir des composants indiqués dans le tableau récapitulatif 1.

Un échantillon d'acier décapé identique à celui de l'exemple 5 est revêtu par immersion comme à l'exemple 5. La réticulation a lieu par voie thermique: l'échantillon revêtu est placé dans une étuve à température ambiante puis la température est augmentée pendant une heure jusqu'à 120° C, est maintenue à 120° C pendant une heure et est finalement abaissée pendant une heure jusqu'à température ambiante.

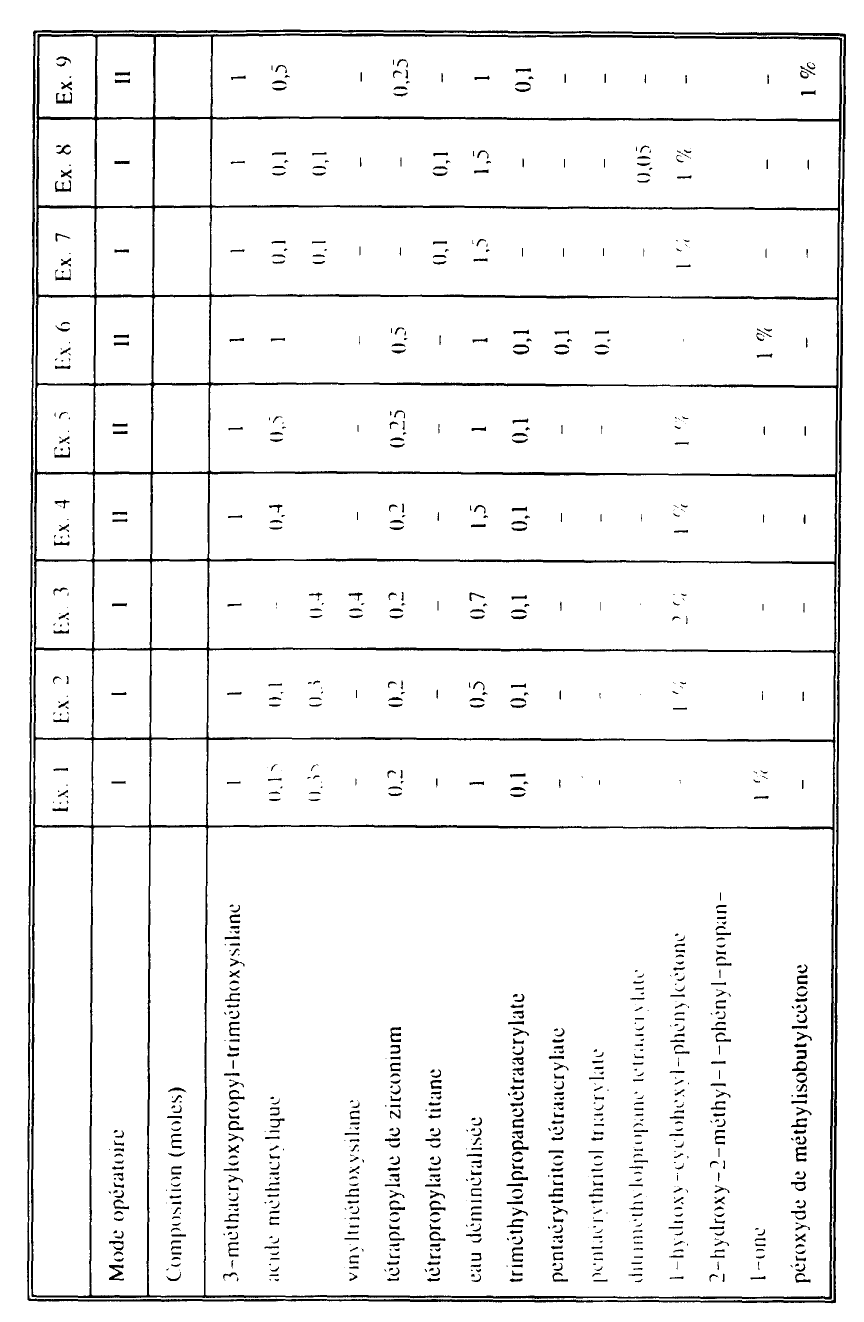

Les revêtements déposés sur les substrats métalliques peuvent être caractérisés par l'épaisseur de la couche densifiée mesurée par la méthode non destructive de l'induction magnétique (appareil ELCOMETER 256 FNT2). Chaque mesure d'épaisseur est une moyenne de 10 valeurs mesurées en des endroits répartis sur toute la surface du revêtement.

L'état de surface du matériau peut être visualisé par microscopie optique ou par microscopie électronique à balayage. Les substrats sont soumis à des tests pour évaluer les propriétés apportées par le revêtement. L'adhérence du revêtement est déterminée par quadrillage suivant la norme NFT 30-038, DIN 53151.

L'essai consiste à inciser la couche de revêtement jusqu'au substrat par 6 coupes parallèles espacées de 1 mm et perpendiculaires qui se croisent; la partie quadrillée est frottée avec une brosse polyamide et un ruban adhésif (suivant la norme NFX41-022) est appliqué puis arraché de l'échantillon.

Le résultat de l'essai est classifié en six catégories.

L'adhérence peut également être déterminée dans d'autres conditions, par exemple par arrachement suivant la norme NFT 30-062 ou par choc suivant la norme NFT 30-017.

La dureté du revêtement est établie par la mesure de la microdureté à la rayure à l'aide de l'appareil ERICHSEN 413. L'échantillon est fixé sur un plateau tournant et est soumis à la charge réglable d'un stylet de diamant présentant un angle de découpe de 90° et un rayon de point de 90 µm. La présence de la rayure est appréciée visuellement au moyen d'une loupe (x3,5). La valeur retenue est la charge minimale en g à partir de laquelle la rayure reste visible.

Des tests de résistance à l'abrasion (suivant la norme expérimentale T 30-015) ou ou gravillonage peuvent également être mis en oeuvre.

Ces tests donnent des indications sur les propriétés dites mécaniques du revêtement.

Enfin, les substrats revêtus sont soumis à un test de résistance à la corrosion. Parmi les différentes simulations du phénomène de corrosion disponibles, comme le brouillard salin (norme NFX 41-002), l'enceinte climatique (NF 30-072, DIN 50017) ou l'exposition atmosphérique, on a choisi de procéder par mesures électrochimiques d'impédance.

L'échantillon à étudier (électrode de travail) est immergé dans un électrolyte qui est une solution de Na₂SO₄ M/20 ou de NaCl 1 %. La surface exposée est de 7 cm². Toutes les mesures seront effectuées après une heure d'immersion. Une perturbation sinusoïdale en potentiel lui est appliquée pour des fréquences décroissantes, allant de 100 kHz à 0,01 Hz.

Par l'intermédiaire d'un montage à trois électrodes, d'un potentiostat EGG 273A et d'un analyseur de fréquence Schlumberger SI 1255, le courant réponse sinusoïdal est mesuré; un logiciel d'acquisition EGG M388 permet de calculer l'impédance du système étudié pour les différentes fréquences.

L'impédance d'une éprouvette permet d'appréhender ses caractéristiques électrochimiques et la cinétique des processus de diffusion et de corrosion.

En effet, l'impédance de l'éprouvette est fonction de la résistance de l'électrolyte RΩ, de la capacité du film protecteur Cc, de la résistance de l'électrolyte à travers les discontinuités du film (pores) Rpo, de la capacité de la double couche électrochimique Cdl et de la résistance du transfert de charge Rct (impédance faradique des réactions de corrosion du métal).

Toutes ces informations peuvent être obtenues à partir de l'impédance en représentation de Nyquist.

En résumé la corrosion sera caractérisée par une :
- diminution de Rpo correspondant à l'augmentation de la surface de contact électrolyte/métal (dégradation du film par formation de pores de plus en plus nombreux);
- augmentation de Cc correspondant essentiellement à la dégradation du film par hydratation;
- diminution de Rct correspondant à la plus faible résistance du métal vis-à-vis de la corrosion au fur et à mesure que le film se dégrade;
- augmentation de Cdl correspondant à l'augmentation du phénomène de transfert de charges lié à la corrosion.

Plusieurs substrats revêtus sont obtenus conformément à l'exemple 4 en faisant varier la vitesse de retrait du substrat de la solution de revêtement, ce qui a pour effet de faire varier l'épaisseur de la couche de revêtement. Le Tableau 2 rassemble les résultats des mesures d'adhérence, de microdureté et de corrosion pour 5 de ces substrats.

**TABLEAU 2**

| | | | | | |
|---|---|---|---|---|---|
| Epaisseur en µm | 13 | 12 | 10 | 9 | 7 |
| Adhérence | 2 | 2 | 1 | 1 | 0 |
| Rayure en g | 30 | 25 | 10 | 10 | 1 |
| Rpo en kΩ dans Na₂SO₄ M/20 | 75000 | 9800 | 3200 | 1700 | 860 |
| Rpo en kΩ dans NaCl 1 % | 13000 | 1200 | 400 | 130 | |
| Rct en kΩ dans NaCl 1 % | 9000 | 900 | 900 | 590 | 290 |

Tous les revêtements obtenus présentent une adhérence satisfaisante, d'autant meilleure que l'épaisseur de la couche est faible.

La microdureté à la rayure de la surface du revêtement augmente fortement avec l'épaisseur du revêtement, jusqu'à atteindre une charge minimale de 30 g pour 13 µm avant d'apercevoir la première trace visible.

En ce qui concerne la résistance à la corrosion, il apparaît qu'indépendamment de l'électrolyte, la résistance augmente avec l'épaisseur de la protection.

Un acier décapé du type des échantillons utilisés mais non recouvert possède une résistance totale à la corrosion dans les conditions du test inférieure à 1 kΩ.

Les revêtements de l'invention procurent donc une très bonne protection anti-corrosion.

Il est à noter que la bonne protection est obtenue pour des épaisseurs de revêtement inférieures voire nettement inférieures à celles présentées grâce à d'autres techniques classiques comme la peinture par cataphorèse (épaisseur de revêtement de 20 à 30 µm), la peinture en poudre (50-60 µm) ou l'émaillage (150-200 µm).

## Revendications

1. Procédé pour protéger un substrat en acier de la corrosion ou de l'oxydation au moyen d'un film mince de polymère formé sur la surface du métal, par lequel on applique sur le substrat une composition de revêtement comprenant :
a) un alcoxysilane ou un mélange d'alcoxysilanes de formule :
R¹ ₓR² _{Y}Si(OR³)_{z},
où
R¹ représente un groupe vinyle ou méthacryloxy-alkyle(C₁-C₄),
x est un entier de 0 à 3,
R² représente un groupement organique fonctionnel non polymérisable,
y est un entier de 0 à 3,
R³ représente un atome d'hydrogène ou un groupe alkyle comportant de 1 à 4 atomes de carbone,
z est un entier de 1 à 3,
x, y, et z étant tels que leur somme vaut 4,
au moins un alcoxysilane étant tel que x n'est pas égal à 0,
b) de 0,05 à 1 équivalent molaire d'un composé ou d'un mélange de composés organométalliques hydrolysables et condensables de formule :
M(OR)₄,
où
M représente un atome de zirconium ou de titane,
R représente un atome d'hydrogène ou un groupe alkyle comportant de 1 à 4 atomes de carbone,
c) de 0,5 à 2 équivalents molaires d'eau,
d) un monomère ou un mélange de monomères de copolymérisation organique choisis parmi l'acide acrylique et l'acide méthacrylique, en quantité telle que le rapport molaire dudit acide au composé organométallique M(OR)₄ vaut de 0,5 à 2,
et
e) un initiateur de polymérisation organique en quantité telle qu'il représente de 0,1 à 2 % du poids total de la composition,
et on polymérise le revêtement sous activation thermique ou photochimique, le film obtenu ayant une épaisseur allant de 5 à 15 µm,

2. Procédé selon la revendication 1, caractérisé en ce que l'alcoxysilane est le vinyltriéthoxysilane, le 3-méthacryloxypropyltriméthoxysilane ou un mélange de ces deux composés.

3. Procédé selon l'une quelconque des revendications 1 ou 2, caractérisé en ce que le composé organométallique est le tétrapropylate de zirconium ou de titane.

4. Procédé selon l'une quelconque des revendications 1 à 3, caractérisé en ce que le monomère organique est l'acide méthacrylique.

5. Procédé selon l'une quelconque des revendications 1 à 4, caractérisé en ce que la composition de revêtement comprend en outre (f) un additif ou un mélange d'additifs monomères ou oligomères, polyacrylate ou polyméthacrylate, en quantité telle que le rapport molaire dudit additif à l'alcoxysilane vaut de 0,05 à 1.

6. Procédé selon la revendication 5, caractérisé en ce que l'additif est choisi parmi le triméthylolpropanetétraacrylate, le ditriméthylolpropanetétraacrylate, le pentaérythritoltriacrylate, le pentaérythritoltétraacrylate, l'isobornyl acrylate, le tris(2- hydroxyéthyl)isocyanurate triacrylate, le 1,6-hexanedioldiacrylate, le glycéryl triacrylate propoxylé, des époxyacrylates et des méthacrylates d'acides aromatiques.

7. Procédé selon l'une quelconque des revendications 1 à 6, caractérisé en ce que, pour préparer la composition de revêtement, on prépare d'un part une première solution en mélangeant le ou les alcoxysilanes et l'eau, d'autre part, une deuxième solution en mélangeant le composé organométallique avec l'acide copolymérisable, on mélange ces deux solutions, on ajoute éventuellement l'additif et on ajoute enfin l'initiateur de polymérisation.

8. Procédé selon l'une quelconque des revendications 1 à 6, caractérisé en ce que, pour préparer la composition de revêtement, on mélange le composé organométallique et l'acide copolymérisable puis le ou les alcoxysilanes et enfin l'eau, on ajoute éventuellement l'additif et on ajoute finalement l'initiateur de polymérisation.

9. Procédé selon l'une quelconque des revendications 1 à 8, caractérisé en ce que la composition de revêtement est appliquée sur le substrat par immersion, aspersion, pulvérisation électrostatique, spin-coating ou électrodéposition.

10. Procédé selon l'une quelconque des revendications 1 à 9, caractérisé en ce que, pour appliquer la composition de revêtement sur le substrat, on immerge le substrat métallique nettoyé et dégraissé dans un bain comprenant ladite composition de revêtement, puis on le retire du bain à une vitesse constante, allant de 2 cm/min à 35 cm/min.

11. Procédé selon l'une quelconque des revendications 1 à 10, caractérisé en ce que l'initiateur de polymérisation est un initiateur de polymérisation thermique choisi parmi les peroxydes organiques.

12. Procédé selon la revendication 11, caractérisé en ce que l'étape finale de polymérisation se fait sous activation thermique en chauffant graduellement l'échantillon jusqu'à un palier compris entre 60 et 120° C, puis cette température maximale est maintenue pendant une durée variant d'une minute à deux heures et l'échantillon est finalement refroidi graduellement jusqu'à la température ambiante.

13. Procédé selon l'une quelconque des revendications 1 à 10, caractérisé en ce que l'initiateur de polymérisation est un initiateur de polymérisation photochimique choisi parmi les hydroxyphénylcétones.

14. Procédé selon la revendication 13, caractérisé en ce que l'étape finale de polymérisation se fait sous activation photochimique sous rayonnement UV pendant une durée allant de 10 secondes à 5 minutes.

15. Utilisation d'une composition comprenant,
a) un alcoxysilane ou un mélange d'alcoxysilanes de formule :
R¹ ₓR² _{Y}Si(OR³)_{z},
où
R¹ représente un groupe vinyle ou méthacryloxy-alkyle(C₁-C₄),
x est un entier de 0 à 3,
R² représente un groupement organique fonctionnel non polymérisable,
y est un entier de 0 à 3,
R³ représente un atome d'hydrogène ou un groupe alkyle comportant de 1 à 4 atomes de carbone,
z est un entier de 1 à 3,
x, y, et z étant tels que leur somme vaut 4,
au moins un alcoxysilane étant tel que x n'est pas égal à 0, notamment le vinyltriéthoxysilane ou le 3-méthacryloxypropyltriméthoxysilane,
b) de 0,05 à 1 équivalent molaire d'un composé ou d'un mélange de composés organométalliques hydrolysables et condensables de formule :
M(OR)₄,
où
M représente un atome de zirconium ou de titane,
R représente un atome d'hydrogène ou un groupe alkyle comportant de 1 à 4 atomes de carbone, notamment de tétrapropylate de zirconium ou de titane,
c) de 0,5 à 2 équivalents molaires d'eau,
d) un monomère ou un mélange de monomères de copolymérisation organique choisis parmi l'acide acrylique et l'acide méthacrylique, en quantité telle que le rapport molaire dudit acide au composé organométallique M(OR)₄ vaut de 0,5 à 2,
et
e) un initiateur de polymérisation organique en quantité telle qu'il représente de 0,1 à 2 % du poids total de la composition,
pour protéger un substrat en acier contre la corrosion ou l'oxydation, selon laquelle on applique ladite composition sur ledit substrat et on forme un revêtement de 5 à 15 µm d'épaisseur par polymérisation sous activation thermique ou photochimique.

## Patentansprüche

1. Verfahren für den Schutz eines Stahlsubstrats gegen Korrosion oder Oxidation mit Hilfe eines dünnen Polymerfilms, welcher auf die Oberfläche des Metalls aufgetragen wird, und bei dem eine Zusammensetzung einer Beschichtung auf das Substrat aufgetragen wird, die aus folgendem besteht:
a) einem Alkoxysilan oder einem Gemisch von Alkoxysilanen der folgenden Formel:
R¹ ₓR² _{y}Si(OR³)_{z}
darin bedeutet:
R¹ eine Vinylgruppe oder eine Methacryloxyalkylgruppe (C₁-C₄),
x eine ganze Zahl zwischen 0 und 3,
R² eine nicht polymerisierbare funktionelle organische Gruppierung,
y eine ganze Zahl zwischen 0 und 3,
R³ ein Wasserstoffatom oder eine Alkylgruppe, welche 1 bis 4 Kohlenstoffatome trägt,
z eine ganze Zahl zwischen 1 und 3,
x, y und z sind so bemessen, daß ihre Summe 4 beträgt,
wobei mindestens eines der Alkoxysilane so bemessen ist, daß x nicht gleich Null ist,
b) 0,05 bis 1 Grammoleküle einer hydrolisierbaren und kondensierbaren organischen Metallverbindung oder ein Gemisch solcher Verbindungen der Formel:
M(OR)₄,
darin bedeutet:
M ein Zirkoniumatom oder ein Titanatom,
R ein Wasserstoffatom oder eine Alkylgruppe, die 1 bis 4 Kohlenstoffatome aufweist,
c) 0,5 bis 2 Grammoleküle Wasser,
d) ein Monomer oder ein Gemisch von Monomeren der organischen Copolymerisation, welche aus Acrylsäure und Methacrylsäure in einer Menge ausgewählt wird, die sicherstellt, daß das Molverhältnis der Säure zu der organischen Metallverbindung M(OR)₄ zwischen 0,5 und 2 liegt, und
e) einen Initiator für die organische Polymerisation in einer Menge, die so bemessen ist, daß sie 0,1 bis 2 % des Gesamtgewichtes der Zusammensetzung ausmacht,
und diese Beschichtung unter thermischer oder photochemischer Aktivierung polymerisiert wird und der hergestellte Film eine Dicke zwischen 5 und 15 µm aufweist.

2. Verfahren nach Anspruch 1,
**dadurch gekennzeichnet, daß**
das Alkoxysilan ein Vinyltriethoxysilan, ein 3-Methacryloxypropyltrimethoxysilan oder ein Gemisch aus diesen beiden Verbindungen ist.

3. Verfahren nach einem der Ansprüche 1 oder 2,
**dadurch gekennzeichnet, daß**
die organische Metallverbindung aus Zirkoniumtetrapropylat oder Titantetrapropylat besteht.

4. Verfahren nach einem der Ansprüche 1 bis 3,
**dadurch gekennzeichnet, daß**
das organische Monomer aus Methacrylsäure besteht.

5. Verfahren nach einem der Ansprüche 1 bis 4,
**dadurch gekennzeichnet, daß**
die Zusammensetzung der Beschichtung weiterhin (f) einen monomeren oder oligomeren Zusatzstoff oder ein Gemisch von monomeren oder oligomeren Zusatzstoffen, wie zum Beispiel ein Polyacrylat oder ein Polymethacrylat in einer Menge enthält, die so bemessen ist, daß das Molverhältnis zwischen dem Zusatzstoff und dem Alkoxysilan 0,05 bis 1 beträgt.

6. Verfahren nach Anspruch 5,
**dadurch gekennzeichnet, daß**
der Zusatzstoff aus einem Trimethylolpropantetraacrylat, einem Ditrimethylolpropantetraacrylat, einem Pentaerythritoltriacrylat, einem Pentaerythritoltetraacrylat, einem Isobornylacrylat, einem Tri(2-Hydroxyethyl)isozyanunrattriacrylat, einem 1,6-Hexandioldiacrylat, einem propoxyliertem Glyceryltriacrylat, und aus Epoxyacrylaten und Methacrylaten der aromatischen Säuren besteht.

7. Verfahren nach einem der Ansprüche 1 bis 6,
**dadurch gekennzeichnet, daß**
für die Zubereitung der Zusammensetzung der Beschichtung einerseits eine erste Lösung dadurch zubereitet wird, daß das Alkoxysilan oder die Alkoxysilane mit Wasser vermischt werden, und andererseits eine zweite Lösung dadurch hergestellt wird, daß die organische Metallverbindung mit der copolymerisierbaren Säure vermischt wird, und anschließend die beiden Lösungen miteinander vermengt werden und eventuell der Zusatzstoff beigemischt und schließlich der Polymerisationsinitiator dazugegeben wird.

8. Verfahren nach einem der Ansprüche 1 bis 6,
**dadurch gekennzeichnet, daß**
für die Zubereitung der Zusammensetzung der Beschichtung die organische Metallverbindung und die copolymersierbare Säure und dann das Alkoxysilan oder die Alkoxysilane und schließlich das Wasser miteinander vermischt werden, und eventuell der Zusatzstoff beigemischt und schließlich der Polymerisationsinitiator dazugegeben wird.

9. Verfahren nach einem der Ansprüche 1 bis 8,
**dadurch gekennzeichnet, daß**
die Zusammensetzung der Beschichtung im Tauchbad, durch Besprühen, elektrostatische Zerstäubung, Spin-coating oder Metallisieren auf das Subtrat aufgetragen wird.

10. Verfahren nach einem der Ansprüche 1 bis 9,
**dadurch gekennzeichnet, daß**
für den Auftrag der Zusammensetzung der Beschichtung auf das Substrat das gereinigte und entfettete metallische Substrat in ein Bad eingetaucht wird, welches diese Zusammensetzung der Beschichtung enthält, und daß es anschließend aus dem Bad mit einer konstanten Geschwindigkeit herausgezogen wird, die zwischen 2 cm/min bis 35 cm/min liegt.

11. Verfahren nach einem der Ansprüche 1 bis 10,
**dadurch gekennzeichnet, daß**
der Polymerisationsinitiator ein thermischer Polymerisationsinitiator ist, welcher aus organischen Peroxiden ausgewählt wird.

12. Verfahren nach Anspruch 11,
**dadurch gekennzeichnet, daß**
der abschließende Arbeitsschritt der Polymerisation unter thermicher Aktivierung durchgeführt wird, indem die Probe allmählich auf einen Schwellenwert zwischen 60 und 120° C erwärmt wird und dann diese maximale Temperatur während einer Dauer gehalten wird, die zwischen einer Minute und zwei Stunden liegt, und daß die Probe schließlich allmählich auf die Umgebungstemperatur abgekühlt wird.

13. Verfahren nach einem der Ansprüche 1 bis 10,
**dadurch gekennzeichnet, daß**
der Polymerisationsinitiator ein photochemischer Polymerisationsinitiator ist, welcher aus den Hydroxyphenilacetonen ausgewählt wird.

14. Verfahren nach Anspruch 13,
**dadurch gekennzeichnet, daß**
der abschließende Arbeitsschritt der Polymerisation unter photochemischer Aktivierung unter UV-Strahlen über einen Zeitraum durchgeführt wird, welcher zwischen 10 Sekunden und 5 Minuten liegen kann.

15. Verwendung einer Zusammensetzung, die folgendes enthält:
a) ein Alkoxysilan oder ein Gemisch von Alkoxysilanen der Formel:
R¹ ₓR² _{y}Si(OR³)_{z}
darin bedeutet:
R¹ eine Vinylgruppe oder eine Methacryloxyalkylgruppe (C₁-C₄),
x eine ganze Zahl zwischen 0 und 3,
R² eine nicht polymerisierbare funktionelle organische Gruppierung,
y eine ganze Zahl zwischen 0 und 3,
R³ ein Wasserstoffatom oder eine Alkylgruppe, welche 1 bis 4 Kohlenstoffatome trägt,
z eine ganze Zahl zwischen 1 und 3,
und x, y und z sind so bemessen sind, daß ihre Summe 4 beträgt,
wobei mindestens eines der Alkoxysilane so bemessen ist, daß x nicht gleich Null ist, und zwar das Vinyltriethoxysilan oder das 3-Methacryloxypropyltrimethoxysilan,
b) 0,05 bis 1 Grammoleküle einer hydrolisierbaren und kondensierbaren organischen Metallverbindung oder ein Gemisch solcher Verbindungen der Formel:
M(OR)₄,
darin bedeutet:
M ein Zirkoniumatom oder ein Titanatom,
R ein Wasserstoffatom oder eine Alkylgruppe, welche 1 bis 4 Kohlenstoffatome aufweist, und zwar insbesondere das Zirkoniumtetrapropylat oder das Titantetrapropylat,
c) 0,5 bis 2 Grammoleküle Wasser,
d) ein Monomer oder ein Gemisch von Monomeren der organischen Copolymerisation, welches aus Acrylsäure und Methacrylsäure aus einer Menge besteht, die sicherstellt, daß das Molverhältnis der Säure zu der organischen Metallverbindung M(OR)₄ zwischen 0,5 und 2 liegt, und
e) ein Initiator für die organische Polymerisation in einer Menge, die so bemessen ist, daß sie 0,1 bis 2 % des Gesamtgewichtes der Zusammensetzung ausmacht,
um dadurch ein Stahlsubstrat gegen Korrosion oder Oxidation zu schützen, indem diese Zusammensetzung auf das Substrat aufgetragen und durch Polymerisation unter thermischer oder photochemischer Aktivierung eine Beschichtung mit einer Dicke zwischen 5 bis 15 µm hergestellt wird.

## Claims

1. Process for protecting a steel substrate from corrosion or oxidation by meas of a thin film of polymer formed on the surface of the metal, wherein a coating composition is applied to the substrate, said coating composition comprising:
a) an alkoxysilane or a mixture of alkoxysilanes of formula:
R¹ ₓR² _{y}Si(OR³)_{z},
wherein
R¹ denotes a vinyl or methacryloxy-(C₁₋₄)alkyl group,
x is an integer from 0 to 3,
R² denotes a non-polymerisable functional organic group,
y is an integer from 0 to 3,
R³ denotes a hydrogen atom or an alkyl group comprising 1 to 4 carbon atoms,
z is an integer from 1 to 3,
x, y and z being such that they add up to 4,
at least one alkoxysilane being such that x is not equal to 0,
b) from 0.05 to 1 molar equivalent of a hydrolysable and condensable organometallic compound or mixture of compounds of the formula:
M(OR)₄,
wherein
M denotes a zirconium or titanium atom,
R denotes a hydrogen atom or an alkyl group comprising 1 to 4 carbon atoms,
c) 0.5 to 2 molar equivalents of water,
d) an organically copolymerisable monomer or mixture of monomers selected from acrylic acid and methacrylic acid, in an amount such that the molar ratio of said acid to the organometallic compound M(OR)₄ is 0.5 to 2,
and
e) an organic polymerisation initiator in an amount such that it constitutes from 0.1 to 2% of the total weight of the composition,
and the coating is polymerised under thermal or photochemical activation, the resulting film having a thickness ranging from 5 to 15 *µ*m.

2. Process according to claim 1, characterised in that the alkoxysilane is vinyltriethoxysilane, 3-methacryloxypropyltrimethoxysilane or a mixture of these two compounds.

3. Process according to one of claims 1 and 2, characterised in that the organometallic compound is zirconium tetrapropoxide or titanium tetrapropoxide.

4. Process according to any one of claims 1 to 3, characterised in that the organic monomer is methacrylic acid.

5. Process according to any one of claims 1 to 4, characterised in that the coating composition further comprises (f) a monomeric or oligomeric additive or mixture of additives, polyacrylate or polymethacrylate, in a quantity such that the molar ratio of said additive to the alkoxysilane is 0.05 to 1.

6. Process according to claim 5, characterised in that the additive is selected from trimethylolpropane tetraacrylate, ditrimethylolpropane tetraacrylate, pentaerythritol triacrylate, pentaerythritol tetraacrylate, isobornyl acrylate, tris(2-hydroxyethyl)isocyanurate triacrylate, 1,6-hexanedioldiacrylate, propoxylated glyceryl triacrylate, epoxyacrylates and methacrylates of aromatic acids.

7. Process according to any one of claims 1 to 6, characterised in that, in order to prepare the coating composition, on the one hand a first solution is prepared by mixing the alkoxysilane or alkoxysilanes and water together, and on the other hand a second solution is prepared by mixing the organometallic compound with the copolymerisable acid, these two solutions are mixed together, the additive is added if required and finally the polymerisation initiator is added.

8. Process according to any one of claims 1 to 6, characterised in that, in order to prepare the coating composition, the organometallic compound and the copolymerisable acid are mixed together, followed by the alkoxysilane or alkoxysilanes and lastly the water, the additive is added if required and finally the polymerisation initiator is added.

9. Process according to any one of claims 1 to 8, characterised in that the coating composition is applied to the substrate by immersion, sprinkling, electrostatic spraying, spin-coating or electrodeposition.

10. Process according to any one of claims 1 to 9, characterised in that, in order to apply the coating composition to the substrate, the cleaned and degreased metal substrate is immersed in a bath containing said coating composition, then removed from the bath at a constant speed, ranging from 2 cm/min to 35 cm/min.

11. Process according to any one of claims 1 to 10, characterised in that the polymerisation initiator is a thermal polymerisation initiator selected from the organic peroxides.

12. Process according to claim 11, characterised in that the final polymerisation step is carried out with thermal activation by gradually heating the sample up to a temperature range of between 60 and 120°C, then this maximum temperature is maintained for a period which varies from one minute to two hours and finally the sample is gradually cooled to ambient temperature.

13. Process according to any one of claims 1 to 10, characterised in that the polymerisation initiator is a photochemical polymerisation initiator selected from the hydroxyphenylketones.

14. Process according to claim 13, characterised in that the final polymerisation step is carried out with photochemical activation under UV radiation for a period ranging from 10 seconds to 5 minutes.

15. Use of a composition comprising
a) an alkoxysilane or a mixture of alkoxysilanes of formula:
R¹ ₓR² _{y}Si(OR³)₂,
wherein
R¹ denotes a vinyl or methacryloxy-(C₁₋₄)alkyl group,
x is an integer from 0 to 3,
R² denotes a non-polymerisable functional organic group,
y is an integer from 0 to 3,
R³ denotes a hydrogen atom or an alkyl group comprising 1 to 4 carbon atoms,
z is an integer from 1 to 3,
x, y and z being such that they add up to 4,
at least one alkoxysilane being such that x is not equal to 0, particularly vinyltriethoxysilane or 3-methacryloxypropyltrimethoxysilane,
b) from 0.05 to 1 molar equivalent of a hydrolysable and condensable organometallic compound or mixture of compounds of the formula:
M(OR)₄,
wherein
M denotes a zirconium or titanium atom,
R denotes a hydrogen atom or an alkyl group comprising 1 to 4 carbon atoms, notably zirconium tetrapropoxide or titanium tetrapropoxide,
c) 0.5 to 2 molar equivalents of water,
d) an organically copolymerisable monomer or mixture of monomers selected from acrylic acid and methacrylic acid, in an amount such that the molar ratio of said acid to the organometallic compound M(OR)₄ is from 0.5 to 2,
and
e) an organic polymerisation initiator in an amount such that it constitutes from 0.1 to 2% of the total weight of the composition,
in order to protect a steel substrate from corrosion or oxidation, according to which said composition is applied to said substrate and a coating 5 to 15 *µ*m thick is formed by thermally or photochemically activated polymerisation.
